# EUROPEAN PATENT SPECIFICATION

(11) **EP 4 019 220 B1**
(45) Date of publication and mention of the grant of the patent: **27.11.2024**
(21) Application number: 20855278.6
(22) Date of filing: 20.08.2020
(51) Int. Cl.: B29C 33/30, B29C 70/34, B29B 11/06, B29C 65/70, B29L 31/30, B29D 99/00, B29C 33/38, B29C 70/44

(54) **FABRICATION METHOD FOR ASSEMBLED PREFORMED STRUCTURE AND FABRICATION METHOD FOR WALLBOARD STRUCTURE**
VERFAHREN ZUR HERSTELLUNG EINER VORGEFORMTEN STRUKTUR UND VERFAHREN ZUR HERSTELLUNG EINER WANDPLATTENSTRUKTUR
PROCÉDÉ DE FABRICATION DE STRUCTURE PRÉFORMÉE ASSEMBLÉE ET PROCÉDÉ DE FABRICATION DE STRUCTURE DE PANNEAU MURAL

(30) Priority: 22.08.2019 CN 201910778862
(43) Date of publication of application: 29.06.2022
(73) Proprietor: Beijing Aeronautical Science & Technology Research Institute,Commercial Aircraft Corporation of China, Beijing 102211 (CN); Commercial Aircraft Corporation Of China, Ltd., Shanghai 200126 (CN)
(72) Inventor: CONG, Jingjie, Beijing 102211 (CN); LI, Xing, Beijing 102211 (CN); WANG, Yifan, Beijing 102211 (CN); WEN, Shunda, Beijing 102211 (CN); WU, Decai, Beijing 102211 (CN); XU, Dongming, Beijing 102211 (CN)
(74) Representative: Cabinet Beaumont
(86) International application number: PCT/CN2020/110183
(87) International publication number: WO 2021/032150

(56) References cited:
- EP-A1- 1 537 981
- CN-A- 103 042 700
- CN-A- 104 210 670
- CN-A- 107 415 280
- CN-A- 107 415 280
- CN-A- 110 480 884
- RU-C2- 2 333 832
- US-A- 5 817 269

## Description

### TECHNICAL FIELD

The present invention relates to the field of aerospace manufacturing and for example, relates to a mold, a manufacturing method of a fabricated preformed structure and a manufacturing method of a wall panel structure.

### BACKGROUND

Composite materials have been widely applied in the aerospace field because of their advantages such as high specific stiffness, ease of design and integral molding. In the field of aircraft, composite materials have been used to manufacture main force-bearing components such as wing skins (also known as wing panels), fuselages, horizontal stabilizers, ailerons, vertical tails, sidewall panels, bulkheads, wing ribs. Among them, wall panels have been widely used in the main force-bearing structure of the fuselage. The bonding area between the stringers and the skin in the U-shaped panel is larger than that in the T-shaped panel, which directly affects the bonding quality of the entire wall panel structure. In addition, with the existing preforming and process method the dimensional tolerance of the wall panel is difficult to be guaranteed, and so the positioning accuracy of the stringers do not meet the requirement. Further relevant technologies are discussed in the patent application publications: US5817269A, EP1537981A1, and CN107415280A.

### SUMMARY

The claimed invention provides a manufacturing method of a U-shaped stringer fabricated preformed structure as defined in the attached independent claim 1. The manufacturing method improves the efficiency of laying a U-shaped prepreg layer on a skin layer, reduces the manufacturing cost of the mold, improves the corner quality of the stringer, ensures the product quality and precision, and simplifies the technological process. Further improvements are provided in the dependent claims.

The claimed invention provides also a manufacturing method of a U-shaped stringer wall panel structure. The manufacturing method improves the efficiency of laying a U-shaped prepreg layer on a skin layer, reduces the manufacturing cost of the mold, improves the corner quality of the stringer, ensures the product quality and precision, and simplifies the technological process.

One embodiment provides a manufacturing method of a U-shaped stringer fabricated preformed structure. The method adopts a mold for preforming of the U-shaped stringer. The mold includes a base, a rigid mold and an elastic mold. The rigid mold is detachably arranged on the base. The rigid mold is of a U-shaped structure, and is wrapped around the three adjacent external sidewall surfaces of the base. The elastic mold is arranged on the rigid mold. The elastic mold is of a U-shaped structure, and is wrapped on the external sidewall surface of the rigid mold.

The method includes the following steps.

The rigid mold is installed on the base.

A multi-layer structure is laid on the rigid mold, and the multi-layer structure is cured and milled to form the elastic mold having a U-shaped structure.

A prepreg layer is laid on the elastic mold, a U-shaped prepreg layer is formed by performing vacuum preloading on the prepreg layer, and a U-shaped stringer preformed structure is formed by the base, the rigid mold, the elastic mold and the U-shaped prepreg layer.

Multiple U-shaped stringer preformed structures are distributed in a horizontal direction, and an intermediate interlayer is disposed between two adj acent U-shaped stringer preformed structures.

One embodiment provides a manufacturing method of a U-shaped stringer wall panel structure. The method includes the following steps.
a U-shaped stringer fabricated preformed structure is manufactured using the manufacturing method of a U-shaped stringer fabricated preformed structure described above.

The base is removed from the U-shaped stringer fabricated preformed structure.

A skin tooling laid with a skin layer is placed in the horizontal direction.

The U-shaped stringer fabricated preformed structure in which the base is removed is rotated 180 degrees and then placed on the skin layer.

Vacuum packaging is performed on the U-shaped prepreg layer and the skin layer, and the U-shaped prepreg layer and the skin layer are co-cured or co-bound and molded at a given temperature and pressure.

The skin tooling, multiple rigid molds and multiple elastic molds are removed.

### BRIEF DESCRIPTION OF DRAWINGS

FIG. 1 is a schematic view of a mold for preforming of a U-shaped stringer according to a specific embodiment.
FIG. 2 is a schematic view of a U-shaped stringer fabricated preformed structure according to a specific embodiment.
FIG. 3 is a view of a structure in which the U-shaped stringer wall panel structure is not detached from the rigid mold, the elastic mold and the skin tooling according to a specific embodiment.
FIG. 4 is a structural view of a U-shaped stringer wall panel structure according to a specific embodiment.

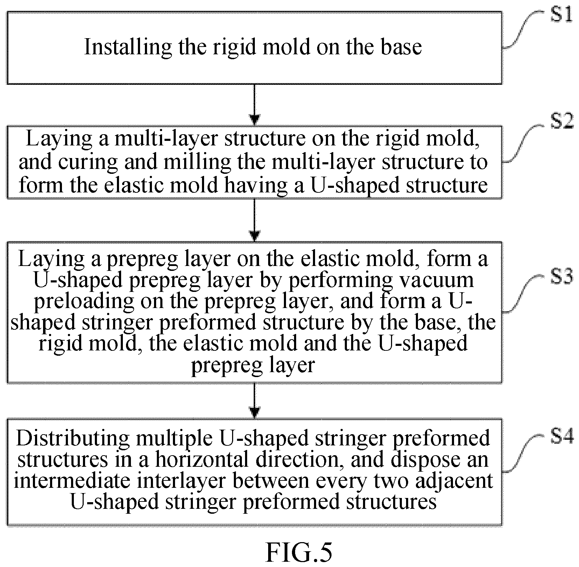

FIG. 5 is a flowchart of a manufacturing method of a U-shaped stringer fabricated preformed structure according to a specific embodiment.
FIG. 6 is a flowchart of a manufacturing method of a U-shaped stringer wall panel structure according to a specific embodiment.

### Reference Signs:

- 1: base
- 11: bottom portion
- 12: raised portion
- 2: rigid mold
- 21: clamping protrusion
- 3: elastic mold
- 4: U-shaped prepreg layer
- 5: intermediate interlayer
- 6: filler
- 7: skin layer
- 8: skin tooling

### DETAILED DESCRIPTION

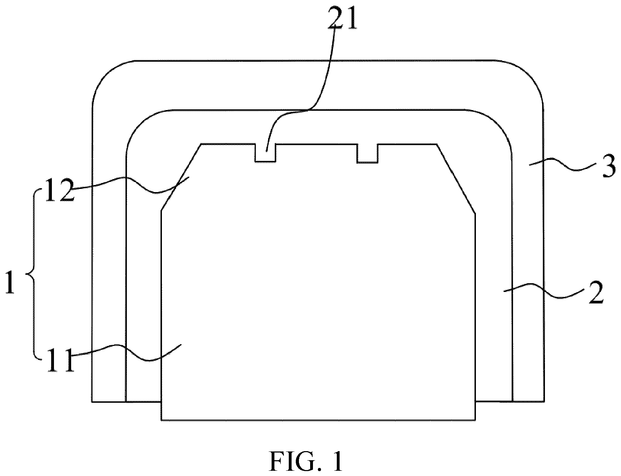

The mold for preforming of a U-shaped stringer in the embodiments will be described below with reference to FIG. 1.

The mold for preforming of the U-shaped stringer includes a base 1, a rigid mold 2 and an elastic mold 3. The rigid mold 2 is detachably arranged on the base 1. The rigid mold 2 is of a U-shaped structure, and is wrapped on the three adjacent external sidewall surfaces of the base 1. The elastic mold 3 is arranged on the rigid mold 2. The elastic mold 3 is of a U-shaped structure, and is wrapped on the external sidewall surface of the rigid mold 2.

The mold for preforming of the U-shaped stringer is an important basis for manufacturing the U-shaped stringer wall panel structure. The mold reduces the manufacturing cost of the mold, indirectly improves the efficiency of laying the U-shaped prepreg layer 4 on the skin layer 7, improves the corner quality of the stringer, ensures the product quality and precision, and simplifies the technological process.

The rigid mold 2 is of a U-shaped structure, which ensures the positioning and longitudinal collimation of the stringer. The elastic mold 3 is of a U-shaped structure, and its thermal expansion ensures the effective transmission of the normal pressure on fiber layers at the corners and the triangular areas of the U-shaped stringer, avoiding defects such as fiber delamination and voids caused by failure of full pressure transmission and ensuring the quality of the U-shaped stringer wall panel structure. Exemplarily, the elastic mold 3 adopts the structure form of AIRPAD rubber sheet + prepreg layer + AIRPAD rubber sheet. In some embodiments, the elastic mold 3 can select other structure forms according to specific requirements.

Optionally, the base 1 includes a bottom portion 11 and a raised portion 12. The raised portion 12 is connected to the bottom portion 11. The rigid mold 2 is wrapped on the external sidewall surface of the raised portion 12 and two opposite external sidewall surfaces of the bottom portion 11. The raised portion 12 has a width gradually decreased in a direction away from the bottom portion11.

Exemplarily, since the raised portion 12 has the width gradually decreased in the direction away from the bottom portion11, it can be known that the raised portion 12 has a ladder structure having a narrow top and a wide bottom, which facilitates the operator to remove the rigid mold 2 from the base 1. In addition, the bottom portion 11 and the raised portion 12 may be integrally formed, or can be fixedly connected by welding, bonding or other methods.

Optionally, one of the base 1 and the rigid mold 2 is provided with a clamping slot, and the other is provided with a clamping protrusion 21 matching the clamping slot.

Exemplarily, the base 1 and the rigid mold 2 are provided with matching connectors of the clamping slot and the clamping protrusion 21, so that the stability of the rigid mold 2 placed on the base 1 is improved and the rigid mold 2 is not easy to loosen, thereby improving the product quality and precision. In other embodiments, the connection between the base 1 and the rigid mold 2 is not limited to the matching manner of the clamping slot and the clamping protrusion 21, and the connection manner can be selected according to specific conditions.

Optionally, external sidewall corners of the rigid mold 2 are arc-shaped. Optionally, the external sidewall corners of the rigid mold 2 are arc-shaped, which ensures the positioning and longitudinal collimation of the stringer.

Optionally, inner sidewall corners and external sidewall corners of the elastic mold 3 are arc-shaped. In this embodiment, inner sidewall corners and external sidewall corners of the elastic mold 3 are arc-shaped, which ensures the effective transmission of the applied pressure on the stringer structure during the curing process, and effectively reduces the stress concentration at corners of the U-shaped prepreg layer 4, thereby avoiding the defects on the U-shaped prepreg layer 4 such as the delamination and voids, and ensuring the quality of the U-shaped stringer wall panel structure.

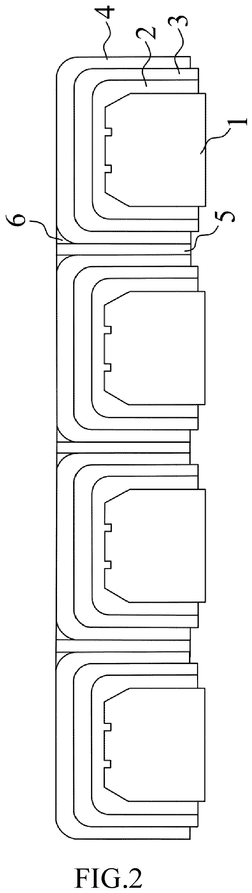

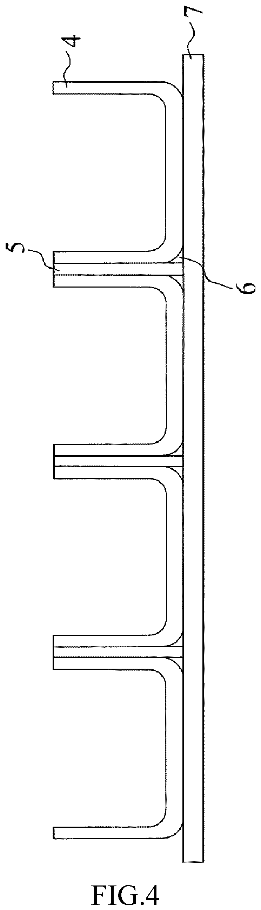

The manufacturing method of a U-shaped stringer fabricated preformed structure in the embodiments is described in accordance with FIGS. 2 and 4

The manufacturing method of the U-shaped stringer fabricated preformed structure adopts the mold for preforming of the U-shaped stringer, and includes the following steps.

In S1, the rigid mold 2 is installed on the base 1.

In S2, a multi-layer structure is laid on the rigid mold 2, and the multi-layer structure is cured and milled to form the elastic mold 3 having a U-shaped structure.

In S3, a prepreg layer is laid on the elastic mold 3, a U-shaped prepreg layer 4 is formed by performing vacuum preloading on the prepreg layer, and a U-shaped stringer preformed structure is formed by the base 1, the rigid mold 2, the elastic mold 3 and the U-shaped prepreg layer 4.

In S4, multiple U-shaped stringer preformed structures are distributed in a horizontal direction, and an intermediate interlayer 5 is disposed between two adjacent U-shaped stringer preformed structures.

In this embodiment, the manufacturing method of a U-shaped stringer fabricated preformed structure improves the efficiency of laying the U-shaped prepreg layer 4 on the skin layer 7, reduces the manufacturing cost of the mold, improves the corner quality of the stringer, ensures the product quality and precision, and simplifies the technological process. The step that multiple U-shaped stringer preformed structures are distributed in a horizontal direction and an intermediate interlayer 5 is disposed between two adjacent U-shaped stringer preformed structures in S4 facilitates positioning, makes stringer axis and straightness to be easily ensured, and improves the product quality and precision. In addition, the multi-layer structure in S2 can be a structure of AIRPAD rubber sheet + prepreg layer + AIRPAD rubber sheet.

Compared with the related art, the manufacturing method has the following beneficial effects: the rigid mold 2 is installed on the base 1; a multi-layer structure is laid on the rigid mold 2, and the multi-layer structure is cured and milled to form the elastic mold 3 having a U-shaped structure; a prepreg layer is laid on the elastic mold 3, a U-shaped prepreg layer 4 is formed by performing vacuum preloading on the prepreg layer, and in this case, a U-shaped stringer preformed structure is formed by the base 1, the rigid mold 2, the elastic mold 3 and the U-shaped prepreg layer 4; and multiple U-shaped stringer preformed structures are distributed in a horizontal direction, and an intermediate interlayer 5 is disposed between two adjacent U-shaped stringer preformed structures. The manufacturing method of the U-shaped stringer fabricated preformed structure improves the efficiency of laying the U-shaped prepreg layer 4 on the skin layer 7, reduces the manufacturing cost of the mold, improves the corner quality of the stringer, ensures the product quality and precision, and simplifies the technological process.

Advantageously, the U-shaped prepreg layer 4 is a composite material. The composite material has the advantages of high stiffness, ease of design, and easy of integral molding.

Optionally, in S4, each intermediate interlayer 5 is fixedly connect every two U-shaped prepreg layers 4. Exemplarily, since the U-shaped prepreg layer 4 is cured, if two adjacent U-shaped prepreg layers 4 are directly bonded, the connection of the two U-shaped prepreg layers 4 are unstable. The intermediate interlayer 5 is used as a medium to connect the two U-shaped prepreg layers 4, ensuring the connection stability of the two U-shaped prepreg layers 4. Each of intermediate interlayers 5 in multiple U-shaped prepreg layers 4 is fixedly connected to two U-shaped prepreg layers 4, which facilitates the subsequent operation for positioning multiple U-shaped prepreg layers 4 and other components, so that it is unnecessary to position each U-shaped prepreg layer 4 separately, thereby improving the positioning precision and efficiency.

Optionally, bottom surfaces of the bases 1 of the multiple U-shaped stringer preformed structures are coplanar, which facilitates positioning, makes stringer axis and straightness to be easily ensured, and improves the product quality and precision.

Optionally, there is a gap between each U-shaped prepreg layer 4 and the intermediate interlayer 5, and the gap is filled with a filler 6. In this embodiment, the filler 6 is filled in the gap between the U-shaped prepreg layer 4 and the intermediate interlayer 5 and fully compacted, which effectively transfers the applied pressure, controls the defects such as delamination and voids, and ensures the dimensional precision and product quality. Generally, the filler 6 is spill strips, and in other embodiments of the present application, the filler 6 will not be limited to spill strips and may be selected according to specific requirements.

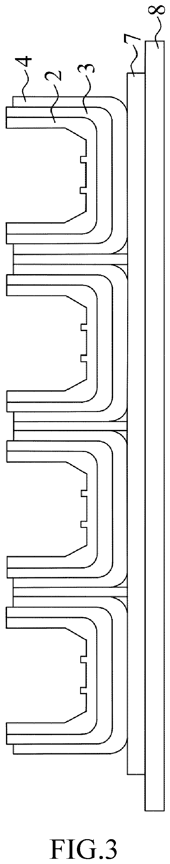

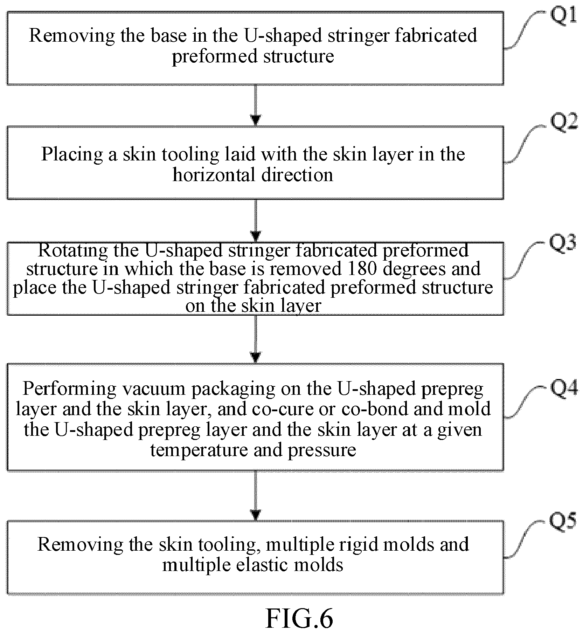

The manufacturing method of a U-shaped stringer wall panel structure in the embodiment is described in accordance with FIGS. 3,4 and 6.

The manufacturing method of the U-shaped stringer wall panel structure includes the following steps.

In Q1, the base 1 is removed from the U-shaped stringer fabricated preformed structure.

In Q2, a skin tooling 8 laid with the skin layer 7 is placed in the horizontal direction.

In Q3, the U-shaped stringer fabricated preformed structure in which the base 1 is removed is rotated 180 degrees and then placed on the skin layer 7.

In Q4, vacuum packaging is performed on the U-shaped prepreg layer 4 and the skin layer 7, and the U-shaped prepreg layer 4 and the skin layer 7 are co-cured or co-bound and molded at a given temperature and pressure.

In Q5, the skin tooling 8, multiple rigid molds 2 and multiple elastic molds 3 are removed.

In this embodiment, the base 1 is removed from the U-shaped stringer fabricated preformed structure, the skin tooling laid with the skin layer 7 is placed in the horizontal direction, the U-shaped stringer fabricated preformed structure in which the base 1 is removed is rotated 180 degrees and then placed on the skin layer 7, vacuum packaging is performed on the U-shaped prepreg layer 4 and the skin layer 7, the U-shaped prepreg layer 4 and the skin layer 7 are co-cured or co-bound and molded at a given temperature and pressure, the skin tooling 8, the rigid mold 2 and the elastic mold 3 are removed, and finally the U-shaped stringer wall panel structure is obtained. The manufacturing method of the U-shaped stringer wall panel structure improves the efficiency of laying the U-shaped prepreg layer 4 on the skin layer 7, reduces the manufacturing cost of the mold, improves the corner quality of the stringer, ensures the product quality and precision, and simplifies the technological process. In Q4, the U-shaped prepreg layer 4 and the skin layer 7 are completely laminated, their bounding area is relatively large, and the stability between the two is strong, which effectively avoids the debonding of the stringer and ensures the quality of the U-shaped stringer wall panel structure.

Exemplarily, the range of the given temperature is typically 25 °C to 200 °C and the range of the pressure is typically 101,325 kPa to 810,6 kPa (1 to 8 standard atmosperic pressures). In other embodiments, ranges of the given temperature and pressure can be adjusted depending on specific conditions.

The manufacturing method of the U-shaped stringer wall panel structure of a specific embodiment is described below.

In a first step, the rigid mold 2 is installed on the base 1.

In a second step, a multi-layer structure is laid on the rigid mold 2, and the multi-layer structure is cured and milled to form the elastic mold 3 having a U-shaped structure.

In a third step, a prepreg layer is laid on the elastic mold 3, a U-shaped prepreg layer 4 is formed by performing vacuum preloading on the prepreg layer, and a U-shaped stringer preformed structure is formed by the base 1, the rigid mold 2, the elastic mold 3 and the U-shaped prepreg layer 4.

In a fourth step, multiple U-shaped stringer preformed structures are distributed in a horizontal direction, and an intermediate interlayer 5 is disposed between two adjacent U-shaped stringer preformed structures, in which each intermediate interlayer 5 is fixedly connect to every two U-shaped prepreg layers 4, bottom surfaces of the bases 1 of multiple U-shaped stringer preformed structures arecoplanar, there is a gap between each U-shaped prepreg layer 4 and the intermediate interlayer 5, and the gap is filled with spill strips, such that a U-shaped stringer fabricated preformed structure is formed.

In a fifth step, the base 1 is removed from the U-shaped stringer fabricated preformed structure.

In a sixth step, the skin tooling 8 laid with the skin layer 7 is placed in the horizontal direction.

In a seventh step, the U-shaped stringer fabricated preformed structure in which the base 1 is removed is rotated 180 degrees and then placed on the skin layer 7.

In an eighth step, vacuum packaging is performed on the U-shaped prepreg layer 4 and the skin layer 7, and the U-shaped prepreg layer 4 and the skin layer 7 are co-cured or co-bound and molded at a given temperature and pressure.

In a ninth step, the skin tooling 8, multiple rigid molds 2 and multiple elastic molds 3 are removed.

In the description of the specification, the description of reference terms "an embodiment", "some embodiments" and the like means that a specific feature, structure, material, or characteristic described in connection with the embodiment or the example is included in at least one embodiment or example. In the specification, the illustrative description of the preceding terms does not necessarily refer to the same embodiment or example. Moreover, the described specific features, structures, materials or characteristics may be combined in any suitable manner in one or more embodiments or examples.

Furthermore, it is to be understood that orientations or position relations indicated by terms such as "upper", "lower", "left", "right", "vertical", and "horizontal" are orientations or position relations based on the drawings. These orientations or position relations are intended only to facilitate the description and simplify the description and not to indicate or imply that a device or element referred to must have such specific orientations or must be configured or operated in such specific orientations. Thus, these orientations or position relations are not to be construed as limiting.

Unless otherwise expressly specified and defined, the term "connected to each other", "connected", "installed" or "fixed" is to be construed in a broad sense, for example, as fixedly connected, detachably connected, or integrated; mechanically connected or electrically connected; directly connected to each other or indirectly connected to each other via an intermediary; or internally connected between two elements or interactional relations between two elements.

## Claims

1. A manufacturing method of a U-shaped stringer fabricated preformed structure, the manufacturing method adopting a mold for preforming of a U-shaped stringer, wherein the mold for preforming of a U-shaped stringer comprises:
a base (1);
a rigid mold (2), detachably arranged on the base (1), the rigid mold (2) being of a U-shaped structure and wrapping around three adjacent external sidewall surfaces of the base (1); and
an elastic mold (3), arranged on the rigid mold (2), the elastic mold (3) being of a U-shaped structure and wrapping around external sidewall surfaces of the rigid mold (2);
and wherein manufacturing method of a U-shaped stringer fabricated preformed structure comprises:
installing the rigid mold (2) on the base (1);
laying a multi-layer structure on the rigid mold (2), and curing and milling the multi-layer structure to form the elastic mold (3) having a U-shaped structure;
laying a prepreg layer on the elastic mold (3), forming a U-shaped prepreg layer (4) by performing vacuum preloading on the prepreg layer, and forming a U-shaped stringer preformed structure by the base (1), the rigid mold (2), the elastic mold (3), and the U-shaped prepreg layer (4); and
distributing a plurality of U-shaped stringer preformed structures in a horizontal direction, and disposing an intermediate interlayer (5) between every two adjacent U-shaped stringer preformed structures.

2. The manufacturing method of claim 1, wherein each of the intermediate interlayers (5) is configured to fixedly connect every two adjacent U-shaped prepreg layers (4).

3. The manufacturing method of claim 1 or 2, wherein bottom surfaces of the bases (1) of the plurality of U-shaped stringer preformed structures are coplanar.

4. The manufacturing method of any of claims 1 to 3, wherein a gap between each of the U-shaped prepreg layers (4) and the intermediate interlayer (5) is filled with a filler (6).

5. A manufacturing method of a U-shaped stringer wall panel structure, comprising:
manufacturing a U-shaped stringer fabricated preformed structure using the method of any of claims 1 to 4;
removing the base (1) in the U-shaped stringer fabricated preformed structure;
placing a skin tooling (8) laid with a skin layer (7) in the horizontal direction;
rotating the U-shaped stringer fabricated preformed structure in which the base (1) is removed 180 degrees, and placing the U-shaped stringer fabricated preformed structure on the skin layer (7);
performing vacuum packaging on the U-shaped prepreg layer (4) and the skin layer (7), and co-curing or co-bonding and molding the U-shaped prepreg layer (4) and the skin layer (7) at a given temperature and pressure; and
removing the skin tooling (8), the plurality of rigid molds (2) and the plurality of elastic molds (3).

## Patentansprüche

1. Herstellungsverfahren einer vorgefertigten und vorgeformten Struktur eines U-förmigen Stringers, wobei das Herstellungsverfahren eine Form zum Vorformen eines U-förmigen Stringers verwendet, wobei die Form zum Vorformen eines U-förmigen Stringers Folgendes umfasst:
eine Basis (1);
eine starre Form (2), die lösbar an der Basis (1) angeordnet ist, wobei die starre Form (2) eine U-förmige Struktur ist und um drei benachbarte äußere Seitenwandflächen der Basis (1) gewickelt ist; und eine elastische Form (3), die an der starren Form (2) angeordnet ist, wobei die elastische Form (3) eine U-förmige Struktur ist und um äußere Seitenwandflächen der starren Form (2) gewickelt ist;
und wobei das Herstellungsverfahren einer vorgefertigten und vorgeformten Struktur eines U-förmigen Stringers Folgendes umfasst:
Installieren der starren Form (2) auf der Basis (1);
Verlegen einer Mehrschichtstruktur auf der starren Form (2), und Aushärten und Fräsen der Mehrschichtstruktur, um die elastische Form (3) mit einer U-förmigen Struktur zu bilden;
Verlegen einer Prepreg-Schicht auf der elastischen Form (3), Bilden einer U-förmigen Prepreg-Schicht (4) durch Durchführen einer Vakuumvorspannung auf der Prepreg-Schicht und Bilden einer vorgefertigten und vorgeformten Struktur eines U-förmigen Stringers durch die Basis (1), die starre Form (2), die elastische Form (3) und die U-förmige Prepreg-Schicht (4); und Verteilen einer Vielzahl von vorgefertigten und vorgeformten Strukturen U-förmiger Stringer in einer horizontalen Richtung und Anordnen einer Zwischenschicht (5) zwischen jeweils zwei benachbarten vorgefertigten und vorgeformten Strukturen U-förmiger Stringer.

2. Herstellungsverfahren nach Anspruch 1, wobei jede der Zwischenschichten (5) konfiguriert ist, je zwei benachbarte U-förmige Prepreg-Schichten (4) fest zu verbinden.

3. Herstellungsverfahren nach Anspruch 1 oder 2, wobei Bodenflächen der Basen (1) der Vielzahl von vorgefertigten und vorgeformten Strukturen U-förmiger Stringer koplanar sind.

4. Herstellungsverfahren nach einem der Ansprüche 1 bis 3, wobei ein Spalt zwischen jeder der U-förmigen Prepreg-Schichten (4) und der Zwischenschicht (5) mit einem Füllstoff (6) gefüllt ist.

5. Herstellungsverfahren einer U-förmigen Stringerwandpaneelstruktur, umfassend:
Herstellen einer vorgefertigten und vorgeformten Struktur eines U-förmigen Stringers unter Verwendung des Verfahrens nach einem der Ansprüche 1 bis 4;
Entfernen der Basis (1) in der vorgefertigten und vorgeformten Struktur eines U-förmigen Stringers;
Platzieren eines mit einer Hautschicht (7) in horizontaler Richtung verlegten Hautwerkzeugs (8);
Drehen der vorgefertigten und vorgeformten Struktur eines U-förmigen Stringers, in der die Basis (1) entfernt ist, um 180 Grad und Platzieren der vorgefertigten und vorgeformten Struktur eines U-förmigen Stringers auf der Hautschicht (7);
Durchführen einer Vakuumverpackung an der U-förmigen Prepreg-Schicht (4) und der Hautschicht (7), und Co-Härten oder Co-Binden und Formen der U-förmigen Prepreg-Schicht (4) und der Hautschicht (7) bei einer gegebenen Temperatur und einem gegebenen Druck; und
Entfernen des Hautwerkzeugs (8), der Vielzahl von starren Formen (2) und der Vielzahl von elastischen Formen (3).

## Revendications

1. Procédé de fabrication d'une structure préformée fabriquée à longeron en forme U, le procédé de fabrication adoptant un moule pour préformer un longeron en forme U, dans lequel le moule pour préformer un longeron en forme U comprend :
une base (1) ;
un moule rigide (2), disposé de manière amovible sur la base (1), le moule rigide (2) présentant une structure en forme U et s'enroulant autour de trois surfaces latérales externes adjacentes de la base (1) ; et un moule élastique (3), disposé sur le moule rigide (2), le moule élastique (3) présentant une structure en forme U et s'enroulant autour des surfaces latérales externes du moule rigide (2) ;
et dans lequel le procédé de fabrication d'une structure préformée fabriquée à longeron en forme U comprend :
installer le moule rigide (2) sur la base (1) ;
poser une structure multi-couche sur le moule rigide (2), et durcir et fraiser la structure multi-couche pour former le moule élastique (3) présentant une structure en forme U ;
poser une couche préimprégnée sur le moule élastique (3), former une couche préimprégnée en forme U (4) en effectuant un préchargement sous vide sur la couche préimprégnée, et former une structure préformée à longeron en forme U par la base (1), le moule rigide (2), le moule élastique (3) et la couche préimprégnée en forme U (4) ; et distribuer une pluralité de structures préformées à longeron en forme U dans une direction horizontale, et disposer une inter-couche intermédiaire (5) entre chaque deux structures préformées à longeron en forme U adjacentes.

2. Procédé de fabrication selon la revendication 1, dans lequel chacune des inter-couches intermédiaires (5) est configurée pour relier de manière fixe chaque deux couches préimprégnées en forme U (4) adjacentes.

3. Procédé de fabrication selon la revendication 1 ou 2, dans lequel des surfaces inférieures des bases (1) de la pluralité de structures préformées en forme U sont coplanaires.

4. Procédé de fabrication selon l'une quelconque des revendications 1 à 3, dans lequel un espace entre chacune des couches préimprégnées en forme U (4) et l'inter-couche intermédiaire (5) est rempli d'un agent de remplissage (6).

5. Procédé de fabrication d'une structure de mur-rideau à longeron en forme U, comprenant :
fabriquer une structure préformée fabriquée à longeron en forme U par le procédé selon l'une quelconque des revendications 1 à 4 ;
retirer la base (1) de la structure préformée fabriquée à longeron en forme U ;
placer un outillage de revêtement (8) posé avec une couche de revêtement (7) dans la direction horizontale ;
faire tourner la structure préformée fabriquée à longeron en forme U dans laquelle est retirée la base (1) de 180 degrés, et placer la structure préformée fabriquée à longeron en forme U sur la couche de revêtement (7) ;
effectuer un emballage sous vide sur la couche préimprégnée en forme U (4) et la couche de revêtement (7), et co-durcir ou co-coller et mouler la couche préimprégnée en forme U (4) et la couche de revêtement (7) à une température et une pression donnée ; et
éliminer l'outillage de revêtement (8), la pluralité de moules rigides (2) et la pluralité de moules élastiques (3).
